(19) Europäisches Patentamt
European Patent Office
Office européen des brevets

(11) **EP 2 130 600 B1**

(12) **EUROPEAN PATENT SPECIFICATION**

(45) Date of publication and mention
of the grant of the patent:
**24.09.2014 Bulletin 2014/39**

(51) Int Cl.:
*B01J 35/04* (2006.01)  *B01J 29/00* (2006.01)
*B01D 53/92* (2006.01)  *F01N 3/00* (2006.01)
*B01D 53/94* (2006.01)  *B01J 29/76* (2006.01)
*B01J 35/00* (2006.01)  *C04B 38/00* (2006.01)
*F01N 3/28* (2006.01)  *F01N 3/20* (2006.01)

(21) Application number: **09000504.2**

(22) Date of filing: **15.01.2009**

(54) **Honeycomb structure**

Wabenstruktur

Structure en nid d'abeille

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **20.05.2008 PCT/JP2008/059278**

(43) Date of publication of application:
**09.12.2009 Bulletin 2009/50**

(73) Proprietor: **Ibiden Co., Ltd.
Ogaki-shi
Gifu 503-8604 (JP)**

(72) Inventors:
 • **Ohno, Kazushige
 Ibi-gun, Gifu 501-0695 (JP)**
 • **Kunieda, Masafumi
 Ibi-gun, Gifu 501-0695 (JP)**
 • **Ido, Takahiko
 Ibi-gun, Gifu 501-0695 (JP)**

(74) Representative: **HOFFMANN EITLE
Patent- und Rechtsanwälte
Arabellastrasse 4
81925 München (DE)**

(56) References cited:
 EP-A- 0 554 104    EP-A- 1 479 882
 EP-A- 1 693 554    EP-A- 1 738 814
 EP-A- 1 738 815    US-A1- 2007 259 770
 US-A1- 2008 170 973

**Description**

BACKGROUND OF THE INVENTION

1. Field of the Invention

The present invention relates to honeycomb structures for exhaust gas treatment.

2. Description of the Related Art

A large number of techniques have been developed in relation to conversion of automobile exhaust gas. With an increase in traffic, however, countermeasures taken against exhaust gas have hardly been satisfactory. Not only in Japan but also globally, automobile emission control is going to be further tightened. Especially, control on NOx in diesel emissions has been getting extremely strict. NOx reduction, which conventionally has been achieved by controlling the combustion system of an engine, has become too much to be handled by that alone. As a diesel NOx conversion system responding to such a problem, NOx reduction systems using ammonia as a reducing agent (referred to as "SCR systems") have been proposed. A honeycomb structure is known as a catalyst support used in such systems.

This honeycomb structure has, for example, multiple cells (through holes) extending from one to another of the end faces of the honeycomb structure along its longitudinal directions, and these cells are separated from each other by cell walls supporting a catalyst. Accordingly, when exhaust gas is caused to flow through such a honeycomb structure, NOx included in the exhaust gas is converted by the catalyst supported by the cell walls. Therefore, it is possible to treat the exhaust gas.

In general, the cell walls of such a honeycomb structure are formed of cordierite, and for example, zeolite (with iron or copper introduced through ion exchange) is supported by these cell walls as a catalyst. In addition, it has been proposed to form a honeycomb structure using zeolite for cell walls (for example,

Patent Document 1).

Such a honeycomb structure as described above is made by, for example, uniting a predetermined number of ceramic units by interposing an adhesive layer, and thereafter cutting this united body into a desired shape and further providing a coat layer on its peripheral cut surface. It has been proposed to prevent occurrence of peeling-off or generation of cracks at the interface of the adhesive layer and the ceramic units by adjusting the ratio of the coefficients of thermal expansion and the ratio of Young's moduli of the adhesive layer and the ceramic units to proper ranges at this point (Patent Document 2).

[Patent Document 1] International Publication Number WO 2005/063653 pamphlet.

[Patent Document 2] International Publication Number WO 2003/067042 pamphlet (EP 1 479 882 A1).

As described above, in the honeycomb structure whose adhesive layer and ceramic units have their respective coefficients of thermal expansion and Young's moduli adjusted, it is possible to prevent occurrence of peeling-off and generation of cracks at the interface of the adhesive layer and the ceramic units.

However, the points of occurrence of peeling-off and generation of cracks in the honeycomb structure are not limited to the interface of the adhesive layer and the honeycomb units (ceramic units). In the honeycomb structure having a peripheral coat layer at its peripheral surface, the same problem may occur, for example, at the interface between the honeycomb units and the peripheral coat layer.

Further, the above-mentioned proper ranges of the coefficient of thermal expansion and the Young's modulus in Patent Document 2 are obtained in a honeycomb structure formed of a sintered body such as SiC, and are therefore not necessarily applicable to members other than the sintered body as well. In particular, such a honeycomb structure having its cell walls formed of zeolite as described above is not a sintered body, and is therefore lower in strength than honeycomb structures formed of a sintered body. Accordingly, in the honeycomb structure having its cell walls formed of zeolite, occurrence of peeling-off or generation of cracks at the interface of its honeycomb units and coat layer are still well expected even if their coefficients of thermal expansion and Young's moduli are adjusted to the ranges described in Patent Document 2.

SUMMARY OF THE INVENTION

The present invention is made in view of this problem, and has an object of providing a honeycomb structure where peeling-off and cracks are less likely to be caused at the interface between its honeycomb units and peripheral coat layer.

According to one embodiment of the present invention, a honeycomb structure including one or more pillar honeycomb units and a coat layer provided on a peripheral surface of the one or more honeycomb units, the one or more honeycomb units each being obtained by making an honeycomb structure molded body by extrusion molding using a raw material paste including zeolite, inorganic particles and inorganic binder, drying the molded body and then firing the molded body at 600-1200°C, the honeycomb unit having a plurality of through holes separated by a cell wall, the through holes extending from a first end face to a second end face of the honeycomb unit along a longitudinal direction thereof, wherein

$$0.75 \leqq \kappa c/\kappa h \leqq 1.25,$$

and

$$0.75 \leqq Ec/Eh \leqq 1.25$$

hold,

where Kc and Ec are a coefficient of thermal expansion and a Young's modulus, respectively, of the coat layer in a radial direction of the honeycomb structure, and $\kappa$h and Eh are a coefficient of thermal expansion and a Young's modulus, respectively, of the honeycomb unit in the radial direction of the honeycomb structure, the coefficient of thermal expansion is measured at 700°C.

In the honeycomb structure as set forth above, the zeolite may be one of $\beta$-zeolite, zeolite Y, ferrierite, zeolite ZSM-5, mordenite, faujasite, zeolite A, and zeolite L.

Further, in the honeycomb structure as set forth above, the ratio by weight of silica to alumina is 30 to 50 in the zeolite.

Further, in the honeycomb structure as set forth above, the zeolite may be ion-exchanged with one of Fe, Cu, Ni, Co, Zn, Mn, Ti, Ag, and V.

Further, in the honeycomb structure as set forth above, the one or more honeycomb units may include particles of at least one selected from the group consisting of alumina, silica, zirconia, titania, ceria, and mullite.

Further, in the honeycomb structure as set forth above, the inorganic binder may include at least one selected from the group consisting of alumina sol, silica sol, titania sol, water glass, sepiolite, and attapulgite.

Further, in the honeycomb structure as set forth above, the one or more honeycomb units may further include inorganic fibers.

Further, in the honeycomb structure as set forth above, the inorganic fibers included in the one or more honeycomb units may be at least one selected from the group consisting of alumina, silica, silicon carbide, silica-alumina, glass, potassium titanate, and aluminum borate.

Further, in the honeycomb structure as set forth above, the coat layer may include at least one of inorganic particles, an inorganic binder, and inorganic fibers.

Further, in the honeycomb structure as set forth above, the inorganic particles included in the coat layer may include at least one selected from the group consisting of zeolite, alumina, silica, zirconia, titania, ceria, and mullite.

Further, in the honeycomb structure as set forth above, the inorganic binder included in the coat layer may include at least one selected from the group consisting of alumina sol, silica sol, titania sol, water glass, sepiolite, and attapulgite.

Further, in the honeycomb structure as set forth above, the inorganic fibers included in the coat layer may be at least one selected from the group consisting of alumina, silica, silicon carbide, silica-alumina, glass, potassium titanate, and aluminum borate.

Further, in the honeycomb structure as set forth above, the plural honeycomb units may be joined by interposing an adhesive layer.

According to one aspect of the present invention, it is possible to provide a honeycomb structure where peeling-off and cracks are less likely to be caused at the interface between its honeycomb unit(s) and peripheral coat layer.

BRIEF DESCRIPTION OF THE DRAWINGS

Other objects, features and advantages of the present invention will become more apparent from the following detailed description when read in conjunction with the accompanying drawings, in which:

FIG. 1 is a schematic perspective view of a honeycomb structure according to an embodiment of the present invention;
FIG. 2 is a schematic perspective view of a honeycomb unit of the honeycomb structure of FIG. 1; and

FIG. 3 is a perspective view of another honeycomb structure according to the embodiment of the present invention.

DETAILED DESCRIPTION OF THE PREFERRED EMBODIMENT(S)

A description is given, with reference to the accompanying drawings, of an embodiment of the present invention.

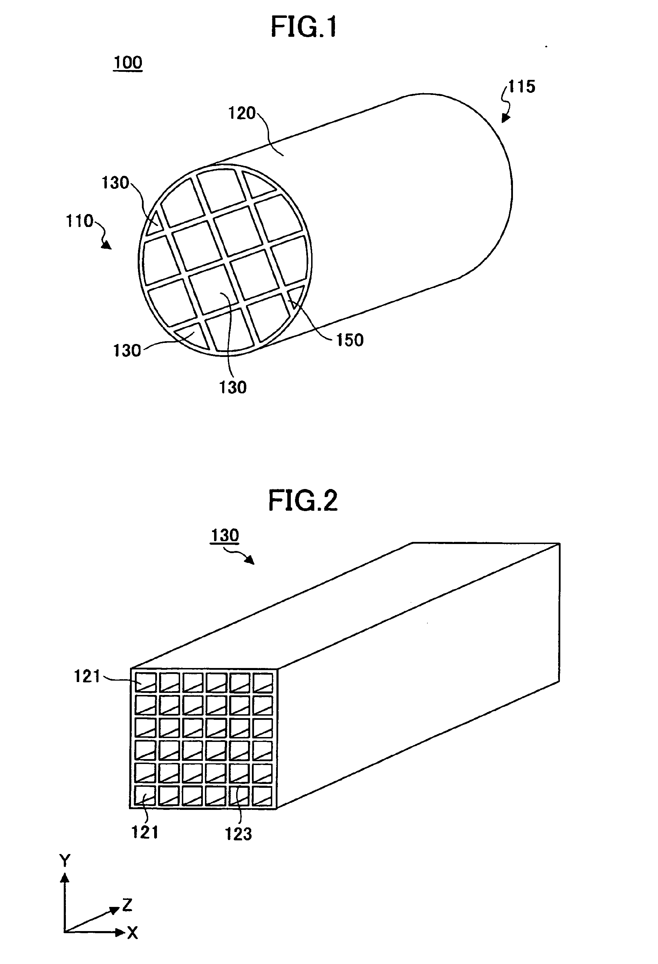

FIG. 1 is a schematic diagram illustrating a honeycomb structure according to the embodiment of the present invention. FIG. 2 is a schematic diagram illustrating a honeycomb unit that is the basic unit of the honeycomb structure illustrated in FIG. 1.

As illustrated in FIG. 1, a honeycomb structure 100 according to this embodiment has two end faces 110 and 115. Further, the honeycomb structure 100 has a peripheral coat layer 120 formed at its peripheral surface except for the end faces 110 and 115.

The honeycomb structure 100 is formed by, for example, joining multiple pillar ceramic honeycomb units 130 shown in FIG. 2 (16 units in a four-by-four matrix in the case of FIG. 1) by interposing an adhesive layer 150 and thereafter cutting the peripheral side along a predetermined shape (a cylindrical shape in the case of FIG. 1).

As illustrated in FIG. 2, the honeycomb unit 130 includes multiple cells (through holes) 121, extending from one end to another end of the honeycomb unit 130 along its longitudinal directions and having two open end faces, and cell walls 123 separating the cells 121. The honeycomb unit 130 of this embodiment contains zeolite, which contributes to conversion of NOx. Accordingly, it is not always necessary to have the cell walls 123 support a noble metal catalyst in the case of using the honeycomb structure 100 of this embodiment as a catalyst support for NOx conversion. However, the cell walls 123 may further support a noble metal catalyst.

The honeycomb structure 100 thus configured is used as, for example, the catalyst support of a urea SCR system having a urea tank. When exhaust gas is caused to flow through this urea SCR system, the urea contained in the urea tank reacts with water in the exhaust gas to generate ammonia:

$$CO(NH_2)_2 + H_2O \rightarrow 2NH_3 + CO_2. \qquad (1)$$

When this ammonia flows, together with exhaust gas including NOx, into each cell 121 from one of the end faces 110 and 115 (for example, the end face 110) of the honeycomb structure 100, the following reactions occur in this gas mixture on zeolite included in the cell walls 123:

$$4NH_3 + 4NO + O_2 \rightarrow 4N_2 + 6H_2O, \qquad (2\text{-}1)$$

$$8NH_3 + 6NO_2 \rightarrow 7N_2 + 12H_2O, \qquad (2\text{-}2)$$

$$2NH_3 + NO + NO_2 \rightarrow 2N_2 + 3H_2O. \qquad (2\text{-}3)$$

Thereafter, the converted exhaust gas is discharged from the other one of the end faces 110 and 115 (for example, the end face 115) of the honeycomb structure 100. Thus, by causing exhaust gas to flow inside the honeycomb structure 100, NOx in the exhaust gas can be treated. Here, a method is shown that supplies $NH_3$ by hydrolyzing urea water, but $NH_3$ may also be supplied by other methods.

Here, in the case of a conventional honeycomb structure formed of a SiC sintered body, peeling-off and cracks are often caused at the interface between its honeycomb units and adhesive layer because of the differences between their coefficients of thermal expansion and between their Young's moduli while the honeycomb structure is in use. Therefore, it has been proposed to prevent occurrence of peeling-off or generation of cracks at the interface between the honeycomb units and the adhesive layer (honeycomb units-adhesive layer interface) by adjusting the thermal expansion coefficient ratio and the Young's modulus ratio of the honeycomb units and the adhesive layer to predetermined ranges in advance (Patent Document 2 described above).

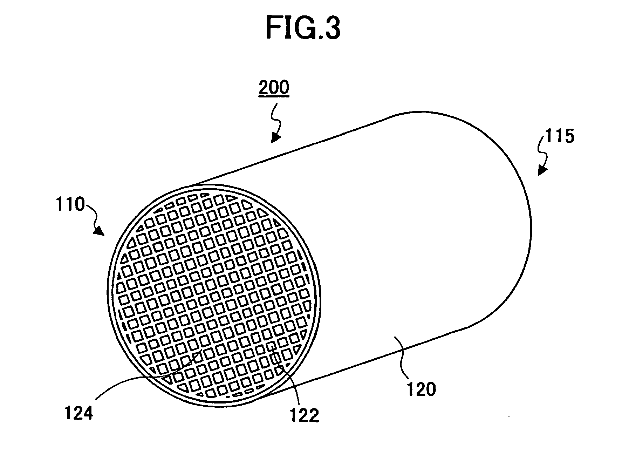

However, such generation of cracks and occurrence of peeling-off are not problems unique to the interface between the honeycomb units and the adhesive layer in the honeycomb structure. That is, the same problem may occur at the interface between the honeycomb units and the peripheral coat layer (honeycomb units-peripheral coat layer interface). Accordingly, in the honeycomb units and the coat layer as well, it is necessary to adjust their coefficients of thermal expansion and Young's moduli to proper ranges. This problem is likely to occur particularly when the honeycomb structure is formed of a single honeycomb unit as illustrated in FIG. 3.

However, the above-mentioned proper ranges of the coefficient of thermal expansion and the Young's modulus in Patent Document 2 are obtained in a honeycomb structure formed of a sintered body such as SiC, and are therefore not necessarily applicable to members other than the sintered body as well. It is known that the honeycomb structure 100 as in this embodiment, where the cell walls 123 contain zeolite whose particles are merely united with an inorganic binder without sufficient sintering, is particularly lower in strength than honeycomb structures formed of a sintered body.

Accordingly, in the honeycomb structure 100 according to this embodiment, peeling-off or cracks may still be caused at the interface of the honeycomb units 130 and the peripheral coat layer 120 even if the coefficients of thermal expansion and the Young's moduli of the honeycomb units 130 and the peripheral coat layer 120 are adjusted to the ranges described in Patent Document 2.

The inventors of the present invention, through many studies based on the above consideration, have found that in a honeycomb structure whose cell walls are formed of a material including zeolite and an inorganic binder, it is possible to significantly prevent occurrence of peeling-off and generation of cracks at the interface between its honeycomb unit and peripheral coat layer by adjusting the coefficients of thermal expansion and the Young's moduli of the honeycomb unit and the peripheral coat layer so that they satisfy predetermined relationships. According to this result, it is possible to significantly prevent occurrence of peeling-off and generation of cracks at the interface between the honeycomb unit and the peripheral coat layer by adjusting respective values so as to satisfy:

$$0.75 \leq \kappa_c/\kappa_h \leq 1.25, \qquad \cdots (3)$$

$$0.75 \leq E_c/E_h \leq 1.25, \qquad \cdots (4)$$

where $\kappa_h$ and $E_h$ are the coefficient of thermal expansion and the Young's modulus, respectively, of the honeycomb unit, and $\kappa_c$ and $E_c$ are the coefficient of thermal expansion and the Young's modulus, respectively, of the peripheral coat layer.

The honeycomb structure 100 of this embodiment has been obtained based on this finding, and is characterized in that the coefficients of thermal expansion and the Young's moduli of the honeycomb units 130 and the peripheral coat layer 120 are adjusted so as to satisfy Eq. (3) and Eq. (4) described above. Because of this characteristic, it is possible to significantly prevent occurrence of peeling-off and generation of cracks at the interface between the honeycomb units 130 and the peripheral coat layer 120 in the honeycomb structure 100 of this embodiment.

According to this embodiment, the coefficients of thermal expansion $\kappa_h$ and $\kappa_c$ of the honeycomb unit and the peripheral coat layer, respectively, are values in a radial direction, that is, in a direction perpendicular to the longitudinal directions. Likewise, the Young's moduli $E_h$ and $E_c$ of the honeycomb unit and the peripheral coat layer, respectively, are also values in the radial direction.

The coefficients of thermal expansion $\kappa_h$ and $\kappa_c$ of the honeycomb unit and the peripheral coat layer, respectively, may be measured by the following method.

A measurement sample having dimensions of 3 mm in length, 3 mm in width, and 15 mm in height is prepared. The measurement sample of the honeycomb unit is made in the same process as in the case of making the actual honeycomb unit, using molding paste (described in detail below) used in manufacturing the honeycomb unit. Likewise, the measurement sample of the peripheral coat layer is made in the same process as in the case of making the actual peripheral coat layer, using peripheral coat layer paste (described in detail below) used in forming the peripheral coat layer on the peripheral surface of the honeycomb unit, so as to have dimensions of 3 mm in length, 3 mm in width, and 15 mm in height.

Next, the measurement samples and an alumina reference sample (3 mm × 3 mm × 15 mm) are placed side by side in an airtight container with the longitudinal directions of the samples being horizontal directions. For each sample, a detection rod is provided so as to be in contact with the center portion of its upper surface (that is, the 3 mm × 15 mm upper area).

Next, in an argon atmosphere, the measurement samples and the reference sample have their temperatures increased from room temperature to 700 °C at a temperature increase rate of 5 °C per minute, and then are cooled naturally to room temperature after being retained at 700 °C for 20 minutes. In this case, the measurement samples and the reference sample expand thermally, and these changes are detected by the detection rods. Accordingly, the coefficients of thermal expansion of the measurement samples are determined from the differences between the changes of the measurement samples and the change of the reference sample.

A thermal dilatometer (DL-7000, manufactured by ULVAC-RIKO, Inc.) is used for the measurement. The minimum detection sensitivity of this apparatus is 0.1 $\mu$m.

The Young's moduli $E_h$ and $E_c$ of the honeycomb unit and the peripheral coat layer, respectively, are measured by the following method.

A measurement sample having dimensions of 10 mm in width, 50 mm in length, and 0.4 mm in thickness is prepared. The measurement sample of the honeycomb unit is made in the same process as in the case of manufacturing the actual honeycomb unit, using molding paste (described in detail below) used in manufacturing the honeycomb unit.

Likewise, the measurement sample of the peripheral coat layer is made in the same process as in the case of manufacturing the actual peripheral coat layer, using peripheral coat layer paste (described in detail below) used in forming the peripheral coat layer on the peripheral surface of the honeycomb unit, so as to have dimensions of 10 mm in width, 50 mm in length, and 0.4 mm in thickness.

Next, the measurement samples are placed in a Young's modulus measuring apparatus, and the Young's moduli of the measurement samples are measured by a so-called resonance method. A JE-RT elastic modulus measuring apparatus (manufactured by Nihon Techno-Plus Co., Ltd.) is used as the measurement apparatus. The measurement atmosphere is the atmosphere, and the measurement temperature is room temperature.

Next, a description is given in more detail of each of members forming the honeycomb structure 100 according to this embodiment.

In the honeycomb structure 100 of this embodiment, each honeycomb unit 130 includes an inorganic binder in addition to zeolite. Further, the honeycomb unit 130 may further include inorganic particles other than zeolite and/or inorganic fibers. Zeolite may be, for example, β-zeolite, zeolite Y, ferrierite, zeolite ZSM-5, mordenite, faujasite, zeolite A, or zeolite L. Alternatively, zeolite may have Fe, Cu, Ni, Co, Zn, Mn, Ag, or V introduced therein through ion exchange. In zeolite, the ratio by weight of silica to alumina is preferably 30 to 50.

Inorganic sol, a clay-based binder, etc., may be used as the inorganic binder. Examples of the inorganic sol include alumina sol, silica sol, titania sol, and water glass. Examples of the clay-based binder include clay, kaolin, montmonrillonite, and clays of a double-chain structure type, such as sepiolite and attapulgite. These may be used alone or in combination.

Of these, at least one selected from the group consisting of alumina sol, silica sol, titania sol, water glass, sepiolite, and attapulgite is desirable.

The inorganic particles other than zeolite are desirably those of alumina, silica, zirconia, titania, ceria, mullite, or the like. These particles may be used alone or in combination. Of these, alumina and zirconia are particularly desirable.

Further, in the case of adding inorganic fibers to the honeycomb unit 130, alumina, silica, silicon carbide, silica-alumina, glass, potassium titanate, aluminum borate or the like is desirable as the material of the inorganic fibers. These may be used alone or in combination. Of the above-described materials, alumina is desirable. Whiskers are also included in inorganic fibers.

With respect to the inorganic particles content (of zeolite and inorganic particles other than zeolite) of the honeycomb unit 130, a desirable lower limit is 30 wt%, a more desirable lower limit is 40 wt%, and a particularly desirable lower limit is 50 wt%, while a desirable upper limit is 90 wt%, a more desirable upper limit is 80 wt%, and a particularly desirable upper limit is 75 wt%. If the inorganic particles content (of zeolite and inorganic particles other than zeolite) is less than 30 wt%, the amount of zeolite contributing to conversion is relatively reduced in amount. On the other hand, if the inorganic particles content exceeds 90 wt%, the strength of the honeycomb unit may be reduced.

The inorganic binder included is preferably more than or equal to 5 wt%, more preferably more than or equal to 10 wt%, and still more preferably more than or equal to 15 wt% as solids content. On the other hand, the inorganic binder content is preferably less than or equal to 50 wt%, more preferably less than or equal to 40 wt%, and still more preferably less than or equal to 35 wt% as solids content. If the amount of the inorganic binder is less than 5 wt% as solids content, the manufactured honeycomb unit may be reduced in strength. On the other hand, if the amount of the inorganic binder exceeds 50 wt% as solids content, the moldability of the raw material composition may be degraded.

In the case of the honeycomb unit 130 including inorganic fibers, the total amount of the inorganic fibers has a lower limit of desirably 3 wt%, more desirably 5 wt%, and still more desirably 8 wt%, and has an upper limit of desirably 50 wt%, more desirably 40 wt%, and still more desirably 30 wt%. If the inorganic fibers content is less than 3 wt%, the contribution of the inorganic fibers to an increase in the honeycomb unit strength is reduced. If the inorganic fibers content exceeds 50 wt%, the amount of zeolite contributing to NOx conversion is relatively reduced.

The shape of a cross section of the honeycomb unit 130 perpendicular to its longitudinal directions is not limited in particular, and may be any shape as long as the honeycomb units 130 are joinable by interposing the adhesive layer 150. The shape of the honeycomb unit 130 may also be square, rectangular, hexagonal, sectorial, etc.

Further, the shape of a cross section of each cell 121 of the honeycomb unit 130 perpendicular to its longitudinal directions is not limited in particular, and may be not only a square shape but also a triangular or polygonal shape.

The cell density of the honeycomb unit 130 is preferably in the range of 15.5-186 cells/cm$^2$ (100-1200 cpsi), more preferably in the range of 46.5-170 cells/cm$^2$ (300-1100 cpsi), and still more preferably in the range of 62-155 cells/cm$^2$ (400-1000 cpsi).

The thickness of the cell walls 123 of the honeycomb unit 130 is not limited in particular, but has a desirable lower limit of 0.1 mm in terms of strength and has a desirable upper limit of 0.4 mm in terms of conversion performance.

The honeycomb structure 100 of this embodiment may have any shape. For example, in addition to a cylindrical shape shown in FIG. 1, the honeycomb structure 100 may also have a shape such as a cylindroid, square pillar, or polygonal pillar.

The adhesive layer 150 of the honeycomb structure 100 is formed using adhesive layer paste as a raw material.

The adhesive layer paste is not limited in particular, and for example, a mixture of inorganic particles and an inorganic binder, a mixture of an inorganic binder and inorganic fibers, a mixture of inorganic particles, an inorganic binder, and inorganic fibers, or the like may be employed. Further, an organic binder may be added thereto.

The same materials as those forming the honeycomb unit 130 as described above may be used as the inorganic particles, inorganic binder, and inorganic fibers. The organic binder is not limited in particular, and may be one or more selected from, for example, polyvinyl alcohol, methylcellulose, ethylcellulose, carboxymethylcellulose, etc. Of the organic binders, carboxymethylcellulose is desirable.

It is preferable that the adhesive layer 150 be 0.3 to 2.0 mm in thickness. This is because if the thickness of the adhesive layer 150 is less than 0.3 mm, sufficient bonding strength may not be obtained. Further, if the thickness of the adhesive layer 150 exceeds 2.0 mm, pressure loss may be increased. The number of honeycomb units to be joined is suitably determined in accordance with the size of the honeycomb structure.

The peripheral coat layer 120 of the honeycomb structure 100 is formed using, as a raw material, paste including at least one of inorganic particles, an inorganic binder, and inorganic fibers. The paste forming the peripheral coat layer 120 may further include an organic binder. The materials forming the peripheral coat layer 120 may be different from, but are preferably the same as those of the adhesive layer 150 because this makes occurrence of peeling-off or generation of cracks less likely. Namely, the inorganic particles included in the peripheral coat layer 120 preferably include at least one selected from the group consisting of zeolite, alumina, silica, zirconia, titania, ceria, and mullite. The inorganic binder included in the peripheral coat layer 120 preferably includes at least one selected from the group consisting of alumina sol, silica sol, titania sol, water glass, sepiolite, and attapulgite. The inorganic fibers included in the peripheral coat layer 120 preferably include at least one selected from the group consisting of alumina, silica, silicon carbide, silica-alumina, glass, potassium titanate, and aluminum borate. A pore-forming agent such as balloons, which are minute hollow balls whose component is oxide-based ceramic, spherical acryl particles, or graphite may be added as required to the paste serving as a raw material. The coat layer 120 preferably has a final thickness of 0.1 mm to 2.0 mm.

In the above description, features of the present invention are explained taking as an example the honeycomb structure 100 formed by joining the multiple honeycomb units 130 by interposing the adhesive layer 150 as illustrated in FIG. 1.

FIG. 3 is a diagram illustrating another honeycomb structure 200 according to this embodiment. The honeycomb structure 200 has the same structure as the honeycomb structure 100 except for being formed of a single honeycomb unit having multiple cells 122 provided in parallel lengthwise, the cells being separated by cell walls 124.

[Method of Manufacturing Honeycomb Structure]

Next, a description is given of a method of manufacturing a honeycomb structure according to this embodiment. Here, a description is given, taking as an example the method of manufacturing the above-described honeycomb structure 100 formed of the multiple honeycomb units 130 as illustrated in FIG. 1. However, it is clear to a person skilled in the art that the following description, except for the process of joining honeycomb units with an adhesive layer, is also applicable to the method of manufacturing the honeycomb structure 200 illustrated in FIG. 3.

First, a honeycomb unit molded body is made by extrusion molding using raw material paste including inorganic particles including zeolite and an inorganic binder as principal components and further having inorganic fibers added as required.

In addition to these, an organic binder, a dispersion medium, and a molding aid may be suitably added to the raw material paste in accordance with moldability. The organic binder is not limited in particular. The organic binder includes one or more organic binders selected from, for example, methylcellulose, carboxymethylcellulose, hydroxyethylcellulose, polyethylene glycol, phenolic resin, epoxy resin and the like. The amount of the organic binder blended is preferably 1-10 parts by weight to the total of 100 parts by weight of the inorganic particles, inorganic binder, and inorganic fibers.

The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, polyalcohol and the like.

The raw material paste is not limited in particular, and is preferably subjected to mixing and kneading. For example, the raw material paste may be mixed using a mixer, attritor, or the like, and may be well kneaded with a kneader or the like. The method of molding the raw material paste is not limited in particular. It is preferable, for example, to form the raw material paste into a shape having cells by extrusion molding or the like.

Next, it is preferable to dry the obtained molded body. The drying apparatus used for drying is not limited in particular, and may be a microwave drying apparatus, hot air drying apparatus, dielectric drying apparatus, reduced-pressure drying apparatus, vacuum drying apparatus, freeze drying apparatus, or the like. Further, it is preferable to degrease the obtained molded body. The conditions for degreasing, which are not limited in particular and are suitably selected in accordance with the kind and amount of the organic matter included in the molded body, are preferably approximately 400 °C and 2 hours. Further, it is preferable to subject the obtained molded body to firing. The condition for firing is not limited in particular, and is preferably 600-1200 °C, and more preferably 600-1000 °C. This is because sintering does not progress at firing temperatures less than 600 °C, thus resulting in reduced strength as a honeycomb unit, and because sintering progresses excessively at firing temperatures more than 1200 °C, thus reducing zeolite reaction sites.

Next, adhesive layer paste to later serve as an adhesive layer is applied with uniform thickness on the side surfaces of the honeycomb unit obtained by the above-described processes, and thereafter, other honeycomb units are stacked one after another on the corresponding sides with this adhesive layer paste being interposed therebetween. By repeating this process, a honeycomb structure of a desired size (for example, having honeycomb units arranged in a four-by-four matrix) is made.

Next, this honeycomb structure is heated to dry and solidify the adhesive layer paste so as to form an adhesive layer and adhere and fix the honeycomb units to each other.

Next, the honeycomb structure is cut into, for example, a cylindrical shape using a diamond cutter or the like, thereby making a honeycomb structure with a necessary peripheral shape.

Next, after applying peripheral coat layer paste on the peripheral surface (side surface) of the honeycomb structure, the peripheral coat layer paste is dried and solidified to form a peripheral coat layer.

Thereafter, the honeycomb structure is degreased. As a result of this treatment, if an organic binder is included in the adhesive layer paste or the peripheral coat layer paste, this organic binder can be removed by degreasing. The conditions for degreasing, which are suitably determined in accordance with the kind and amount of the included organic material, are usually approximately 700 °C and 2 hours.

By the above-described processes, the honeycomb structure 100 illustrated in FIG. 1 can be manufactured.

[Examples]

A detailed description is given of this embodiment based on examples.

[Example 1]

First, 2250 parts by weight of Fe zeolite particles (2 $\mu$m in average particle size, a silica to alumina ratio by weight of 40), 550 parts by weight of alumina particles (2 $\mu$m in average particle size), 2600 parts by weight of alumina sol (30 wt% solids content), 780 parts by weight of alumina fibers (100 $\mu$m in average fiber length and 6 $\mu$m in average fiber diameter), 410 parts by weight of methylcellulose, a plasticizer, and lubricant (UNILUB) were mixed and kneaded, so that a mixture composition (raw material composition) was obtained. The Fe zeolite particles had its part corresponding to 3 wt% of the zeolite weight exchanged with Fe ions. The amount of ion exchange was determined by ICP atomic emission spectrometry using an apparatus ICPS-8100 (manufactured by Shimadzu Corporation). Next, this mixture composition was subjected to extrusion molding with an extruder, so that a honeycomb unit molded body was obtained.

The molded body was sufficiently dried using a microwave drying apparatus and a hot air drying apparatus, and was degreased, being retained at 400 °C for 5 hours. Thereafter, the molded body was subjected to firing, being retained at 700 °C for 5 hours, so that a honeycomb unit having a shape illustrated in FIG. 3 (143 mm in outside diameter and 150 mm in overall length) was obtained. The cell wall thickness was 0.25 mm, and the cell density was 78 cells/cm$^2$. Further, the opening ratio was 60%.

The coefficients of thermal expansion $\kappa$h and $\kappa$c of the honeycomb unit and the peripheral coat layer were measured by the following method.

A measurement sample having dimensions of 3 mm in length, 3 mm in width, and 15 mm in height was prepared. The measurement sample of the honeycomb unit was made with the same process as in the case of making the actual honeycomb unit, using molding paste (raw material composition) used in manufacturing the honeycomb unit. Likewise, the measurement sample of the peripheral coat layer was made in the same process as in the case of making the actual peripheral coat layer, using peripheral coat layer paste used in forming the peripheral coat layer on the peripheral surface of the honeycomb unit, so as.to have dimensions of 3 mm in length, 3 mm in width, and 15 mm in height.

Next, the measurement samples and an alumina reference sample (3 mm x 3 mm $\times$ 15 mm) were placed side by side in an airtight container with the longitudinal directions of the samples being horizontal directions. For each sample, a detection rod was provided so as to be in contact with the center portion of its upper surface (that is, the 3 mm $\times$ 15 mm upper area).

Next, in an argon atmosphere, the measurement samples and the reference sample had their temperatures increased from room temperature to 700 °C at a temperature increase rate of 5 °C per minute, and then were cooled naturally to room temperature after being retained at 700 °C for 20 minutes. In this case, the measurement samples and the reference sample expand thermally, and these changes are detected by the detection rods. Accordingly, the coefficients of thermal expansion of the measurement samples are determined from the differences between the changes of the measurement samples and the change of the reference sample.

A thermal dilatometer (DL-7000, manufactured by ULVAC-RIKO, Inc.) was used for the measurement. The minimum detection sensitivity of this apparatus was 0.1 $\mu$m.

The Young's moduli Eh and Ec of the honeycomb unit and the peripheral coat layer, respectively, were measured by the following method.

A measurement sample having dimensions of 10 mm in width, 50 mm in length, and 0.4 mm in thickness was prepared. The measurement sample of the honeycomb unit was made in the same process as in the case of manufacturing the actual honeycomb unit, using molding paste (raw material composition) used in manufacturing the honeycomb unit. Likewise, the measurement sample of the peripheral coat layer was made in the same process as in the case of manufacturing the actual peripheral coat layer, using peripheral coat layer paste used in forming the peripheral coat layer on the peripheral surface of the honeycomb unit, so as to have dimensions of 10 mm in width, 50 mm in length, and 0.4 mm in thickness.

Next, the measurement samples were placed in a Young's modulus measuring apparatus, and the Young's moduli of the measurement samples were measured by a so-called resonance method. A JE-RT elastic modulus measuring apparatus (manufactured by Nihon Techno-Plus Co., Ltd.) was used as the measurement apparatus. The measurement atmosphere was the atmosphere, and the measurement temperature was room temperature.

As a result of measuring the coefficient of thermal expansion $\kappa$h (in a radial direction) and the Young's modulus Eh (in a radial direction) of the honeycomb unit, the coefficient of thermal expansion $\kappa$h of the honeycomb unit was 0.6 $\times$ 10$^{-6}$ (K$^{-1}$), and the Young's modulus Eh of the honeycomb unit was 1.1 GPa.

Next, the peripheral coat layer paste was applied on the peripheral surface of the honeycomb unit, so as to be cooled after being heated at 120 °C for 1 hour. As a result of this treatment, a peripheral coat layer of 0.5 mm in thickness was formed on the peripheral surface of the honeycomb unit. The peripheral coat layer paste was prepared by mixing 21 wt% of silica (2 $\mu$m in average particle size) as inorganic particles, 25 wt% of alumina sol (30% solids content) as an inorganic binder, 24 wt% of aluminum borate (100 $\mu$m in average fiber length and 6 $\mu$m in average fiber diameter) as inorganic fibers, and 5 wt% of carboxymethylcellulose, and further adding 25 wt% of water to this mixture. No pore-forming agent was added.

As a result of measuring the coefficient of thermal expansion $\kappa$c (in a radial direction) and the Young's modulus Ec (in a radial direction) of the peripheral coat layer by the above-described method, the coefficient of thermal expansion $\kappa$c of the peripheral coat layer was 0.46 $\times$ 10$^{-6}$ (K$^{-1}$), and the Young's modulus Ec of the peripheral coat layer was 1.0 GPa.

By these processes, the honeycomb structure according to Example 1 was manufactured.

(Examples 2 to 11)

Honeycomb structures according to Examples 2 to 11 were obtained by the same method as in Example 1. In these honeycomb structures, however, peripheral coat layers caused to have different coefficients of thermal expansion $\kappa$c and Young's moduli Ec by changing the materials and their blending ratio of the peripheral coat layer paste (that is, the peripheral coat layer) were formed on the peripheral surfaces of their respective honeycomb units.

Table 1 shows a collection of the values of the composition of the peripheral coat layer, the coefficient of thermal expansion $\kappa$c and the Young's modulus Ec of the peripheral coat layer, the ratio ($\kappa$c/$\kappa$h) (the ratio of the coefficient of thermal expansion of the peripheral coat layer to the coefficient of thermal expansion of the honeycomb unit), and the ratio (Ec/Eh) (the ratio of the Young's modulus of the peripheral coat layer to the Young's modulus of the honeycomb unit) of each of the honeycomb structures of Examples 1 to 11. In examples where a pore-forming agent is added to the peripheral coat layer paste, the average particle size of the added pore-forming agent is 0.4 $\mu$m.

Table 1

| | COAT LAYER PASTE COMPOSITION | | | |
|---|---|---|---|---|
| | INORGANIC PARTICLES (BLENDING RATIO) (wt%) | INORGANIC BINDER (BLENDING RATIO) (wt%) | INORGANIC FIBERS (BLENDING RATIO) (wt%) | PORE-FORMING AGENT (BLENDING RATIO) (wt%) |
| EXAMPLE 1 | SILICA(21.0) | ALUMINA SOL (25.0) | ALUMINUM BORATE(24.0) | — |
| EXAMPLE 2 | ALUMINA(13.5) | SILICA SOL (16.1) | ALUMINUM BORATE(15.4) | ACRYL(25.0) |
| EXAMPLE 3 | ALUMINA(12.8) | SILICA SOL (15.2) | ALUMINUM BORATE(14.6) | ACRYL(27.5) |
| EXAMPLE 4 | ALUMINA(12.0) | SILICA SOL (14.3) | ALUMINUM BORATE(13.7) | ACRYL(30.0) |
| EXAMPLE 5 | ZEOLITE(19.5) | ALUMINA SOL (23.2) | ALUMINA(22.3) | ACRYL(5.0) |
| EXAMPLE 6 | SILICA(18.8) | ALUMINA SOL (22.3) | ALUMINA(21.4) | ACRYL(7.5) |
| EXAMPLE 7 | SILICA(18.0) | ALUMINA SOL (21.4) | ALUMINA(20.6) | ACRYL(10.0) |
| EXAMPLE 8 | SILICA(17.3) | ALUMINA SOL (20.5) | ALUMINA(19.7) | ACRYL(12.5) |
| EXAMPLE 9 | ALUMINA(12.0) | SILICA SOL (14.3) | SILICA-ALUMINA(13.7) | ACRYL(30.0) |
| EXAMPLE 10 | ALUMINA(15.0) | ALUMINA SOL (17.9) | SILICA-ALUMINA(17.1) | ACRYL(20.0) |
| EXAMPLE 11 | ALUMINA(13.5) | ALUMINA SOL (16.1) | SILICA-ALUMINA(15.4) | ACRYL(25.0) |
| COMPARATIVE EXAMPLE 1 | ALUMINA(12.8) | ALUMINA SOL (15.2) | SILICA-ALUMINA(14.6) | ACRYL(27.5) |
| COMPARATIVE EXAMPLE 2 | ALUMINA(14.3) | SILICA SOL (17.0) | ALUMINUM BORATE(16.3) | ACRYL(22.5) |
| COMPARATIVE EXAMPLE 3 | ALUMINA(11.3) | SILICA SOL (13.4) | ALUMINUM BORATE(12.9) | ACRYL(32.5) |
| COMPARATIVE EXAMPLE 4 | SILICA(19.5) | ALUMINA SOL (23.2) | ALUMINA(22.3) | ACRYL(5.0) |
| COMPARATIVE EXAMPLE 5 | SILICA(16.5) | ALUMINA SOL (19.6) | ALUMINA(18.9) | ACRYL(15.0) |
| COMPARATIVE EXAMPLE 6 | ALUMINA(15.8) | ALUMINA SOL (18.8) | SILICA-ALUMINA(18.0) | ACRYL(17.5) |
| COMPARATIVE EXAMPLE 7 | ZEOLITE(21.0) | ALUMINA SOL (25.0) | SILICA-ALUMINA(24.0) | — |
| COMPARATIVE EXAMPLE 8 | ALUMINA(10.5) | SILICA SOL (12.5) | ALUMINA(12.0) | ACRYL(35.0) |

Table 1-continued

| | $\kappa$ c $(10^{-6}\mathrm{K}^{-1})$ | Ec (MPa) | RATIO $\kappa$ c／$\kappa$ h (−) | RATIO Ec／Eh (−) | THERMAL SHOCK TEST RESULT |
|---|---|---|---|---|---|
| EXAMPLE 1 | 0.46 | 1.00 | 0.76 | 0.91 | O |
| EXAMPLE 2 | 0.49 | 1.28 | 0.82 | 1.16 | O |
| EXAMPLE 3 | 0.49 | 1.08 | 0.82 | 0.98 | O |
| EXAMPLE 4 | 0.49 | 0.90 | 0.82 | 0.82 | O |
| EXAMPLE 5 | 0.53 | 1.09 | 0.88 | 0.99 | O |
| EXAMPLE 6 | 0.58 | 1.38 | 0.97 | 1.25 | O |
| EXAMPLE 7 | 0.58 | 1.20 | 0.97 | 1.09 | O |
| EXAMPLE 8 | 0.58 | 0.98 | 0.97 | 0.89 | O |
| EXAMPLE 9 | 0.68 | 1.30 | 1.13 | 1.18 | O |
| EXAMPLE 10 | 0.75 | 1.36 | 1.25 | 1.24 | O |
| EXAMPLE 11 | 0.75 | 0.95 | 1.25 | 0.86 | O |
| COMPARATIVE EXAMPLE 1 | 0.75 | 0.75 | 1.25 | 0.68 | × |
| COMPARATIVE EXAMPLE 2 | 0.49 | 1.48 | 0.82 | 1.35 | × |
| COMPARATIVE EXAMPLE 3 | 0.49 | 0.70 | 0.82 | 0.64 | × |
| COMPARATIVE EXAMPLE 4 | 0.58 | 1.60 | 0.97 | 1.45 | × |
| COMPARATIVE EXAMPLE 5 | 0.58 | 0.75 | 0.97 | 0.68 | × |
| COMPARATIVE EXAMPLE 6 | 0.75 | 1.56 | 1.25 | 1.42 | × |
| COMPARATIVE EXAMPLE 7 | 0.42 | 1.17 | 0.70 | 1.06 | × |
| COMPARATIVE EXAMPLE 8 | 0.79 | 1.13 | 1.31 | 1.03 | × |

(Comparative Examples 1 to 8)

Honeycomb structures according to Comparative Examples 1 to 8 were obtained by the same method as in Example 1. In these honeycomb structures, peripheral coat layers caused to have different coefficients of thermal expansion $\kappa$c and Young's moduli Ec by changing the materials and their blending ratio of the peripheral coat layer paste (that is, the peripheral coat layer) were formed on the peripheral surfaces of their respective honeycomb units.

Table 1 shown above shows a collection of the values of the composition of the peripheral coat layer, the coefficient of thermal expansion $\kappa$c and the Young's modulus Ec of the peripheral coat layer, the ratio ($\kappa$c/$\kappa$h), and the ratio (Ec/Eh) of each of the honeycomb structures of Comparative Examples 1 to 8. In comparative examples where a pore-forming agent is added to the peripheral coat layer paste, the average particle size of the added pore-forming agent is 0.4 $\mu$m.

[Thermal Shock Test]

A thermal shock test was conducted on each of the honeycomb structures manufactured in the above-described manner by the following method.

An alumina mat (manufactured by Mitsubishi Chemical Corporation) was put around the entire peripheral surface of the honeycomb structure as a holding sealing material, and the honeycomb structure was attached to a metal casing. This metal casing was put in a furnace maintained at 600 °C and retained for 10 minutes. Thereafter, the honeycomb structure was extracted from the furnace and cooled to room temperature (natural cooling). This operation was repeated 10 times.

After the test, it was visually determined whether peeling-off or a crack had been caused in the honeycomb structure. The result of the thermal shock test of each of the examples and comparative examples is shown in the right column of Table 1 shown above. A circle indicates that neither peeling-off nor cracking was caused in the honeycomb structure after the test, and a cross indicates that peeling-off or a crack was caused in the honeycomb structure after the test.

These results show that the honeycomb structure presents good resistance to a thermal shock when the ratio ($\kappa c/\kappa h$) is in the range of 0.75 to 1.25 and the ratio (Ec/Eh) is in the range of 0.75 to 1.25.

**Claims**

1. A honeycomb structure including one or more pillar honeycomb units and a coat layer provided on a peripheral surface of the one or more honeycomb units, the one or more honeycomb units each being obtained by making a honeycomb structure molded body by extrusion molding using a raw material paste including zeolite, inorganic particles, and an inorganic binder, drying the molded body and then firing the molded body at 600-1200 °C, the honeycomb unit having a plurality of cells in the form of through holes separated by a cell wall, the through holes extending from a first end face to a second end face of the honeycomb unit along a longitudinal direction thereof, **characterized in that**:

$$0.75 \leq \kappa c/\kappa h \leq 1.25,$$

and

$$0.75 \leq Ec/Eh \leq 1.25$$

hold,
where $\kappa c$ and $Ec$ are a coefficient of thermal expansion and a Young's modulus, respectively, of the coat layer in a radial direction of the honeycomb structure, and $\kappa h$ and $Eh$ are a coefficient of thermal expansion and a Young's modulus, respectively, of the honeycomb unit in the radial direction of the honeycomb structure, the coefficient of thermal expansion is measured at 700°C.

2. The honeycomb structure as claimed in claim 1, **characterized in that** the zeolite is one of $\beta$-zeolite, zeolite Y, ferrierite, zeolite ZSM-5, mordenite, faujasite, zeolite A, and zeolite L.

3. The honeycomb structure as claimed in claim 1 or 2, **characterized in that** a ratio by weight of silica to alumina is 30 to 50 in the zeolite.

4. The honeycomb structure as claimed in any of claims 1 to 3, **characterized in that** the zeolite is ion-exchanged with one of Fe, Cu, Ni, Co, Zn, Mn, Ti, Ag, and V.

5. The honeycomb structure as claimed in any of claims 1 to 4, **characterized in that** the inorganic particles include particles of at least one selected from the group consisting of alumina, silica, zirconia, titania, ceria, and mullite.

6. The honeycomb structure as claimed in any of claims 1 to 5, **characterized in that** the inorganic binder includes at least one selected from the group consisting of alumina sol, silica sol, titania sol, water glass, sepiolite, and attapulgite.

7. The honeycomb structure as claimed in any of claims 1 to 6, **characterized in that** the one or more honeycomb units further include inorganic fibers.

8. The honeycomb structure as claimed in claim 7, **characterized in that** the inorganic fibers are at least one selected from the group consisting of alumina, silica, silicon carbide, silica-alumina, glass, potassium titanate, and aluminum borate.

9. The honeycomb structure as claimed in any of claims 1 to 8, **characterized in that** the coat layer includes at least one of inorganic particles, an inorganic binder, and inorganic fibers.

10. The honeycomb structure as claimed in claim 9, **characterized in that** the inorganic particles included in the coat layer include at least one selected from the group consisting of zeolite, alumina, silica, zirconia, titania, ceria, and mullite.

11. The honeycomb structure as claimed in claim 9 or 10, **characterized in that** the inorganic binder included in the coat layer includes at least one selected from the group consisting of alumina sol, silica sol, titania sol, water glass, sepiolite, and attapulgite.

12. The honeycomb structure as claimed in any of claims 9 to 11, **characterized in that** the inorganic fibers included in the coat layer are at least one selected from the group consisting of alumina, silica, silicon carbide, silica-alumina, glass, potassium titanate, and aluminum borate.

13. The honeycomb structure as claimed in any of claims 1 to 12, **characterized in that** the plural honeycomb units are joined by interposing an adhesive layer.

## Patentansprüche

1. Wabenstruktur, die ein oder mehrere säulenförmige Wabeneinheiten und eine Beschichtungsschicht, die auf der Umfangsoberfläche der einen oder mehreren Wabeneinheiten bereitgestellt ist, umfasst, worin die ein oder mehreren Wabeneinheiten jeweils erhalten werden durch Herstellen eines Formkörpers mit Wabenstruktur durch Extrusionsformen unter Verwendung einer Rohmaterialpaste, die Zeolith, anorganische Partikel und ein anorganisches Bindemittel umfasst, Trocknen des Formkörpers und dann Brennen des Formkörpers bei 600-1200°C, wobei die Wabeneinheit eine Mehrzahl von Zellen in Form durchgehender Hohlräume, getrennt durch eine Zellwand, aufweist, wobei sich die durgehenden Hohlräume von einer ersten Endfläche zu einer zweiten Endfläche der Wabeneinheit entlang ihrer Längsrichtung erstrecken, **dadurch gekennzeichnet, dass**:

$$0{,}75 \leq \kappa c/\kappa h \leq 1.25$$

und

$$0{,}75 \leq Ec/Eh \leq 1.25$$

erfüllt sind,
worin $\kappa c$ und $Ec$ der thermische Expansionskoeffizient bzw. das Elastizitätsmodul der Beschichtungsschicht in einer Radialrichtung der Wabenstruktur sind, und $\kappa h$ und $Eh$ der thermische Expansionskoeffizient bzw. das Elastizitätsmodul der Wabeneinheit in Radialrichtung der Wabenstruktur sind, wobei der thermische Expansionskoeffizient bei 700°C gemessen wird.

2. Wabenstruktur gemäß Anspruch 1, **dadurch gekennzeichnet, dass** der Zeolith einer aus $\beta$-Zeolith, Zeolith Y, Ferrierit, Zeolith ZSM-5, Mordenit, Faujasit, Zeolith A und Zeolith L ist.

3. Wabenstruktur gemäß Anspruch 1 oder 2, **dadurch gekennzeichnet, dass** das Gewichtsverhältnis von Siliciumdioxid zu Aluminiumoxid im Zeolith 30 bis 50 ist.

4. Wabenstruktur gemäß irgendeinem der Ansprüche 1 bis 3, **dadurch gekennzeichnet, dass** der Zeolith einem Ionenaustausch mit einem aus Fe, Cu, Ni, Co, Zn, Mn, Ti, Ag und V unterzogen wurde.

5. Wabenstruktur gemäß irgendeinem der Ansprüche 1 bis 4, **dadurch gekennzeichnet, dass** die anorganischen Partikel, Partikel aus mindestens einem, ausgewählt aus der Gruppe bestehend aus Aluminiumoxid, Siliciumdioxid, Zirkoniumdioxid, Titandioxid, Ceroxid und Mullit, einschließen.

6. Wabenstruktur gemäß irgendeinem der Ansprüche 1 bis 5, **dadurch gekennzeichnet, dass** das anorganische Bindemittel mindestens eines, ausgewählt aus der Gruppe bestehend aus Aluminiumoxidsol, Siliciumdioxidsol, Titandioxidsol, Wasserglas, Sepiolith und Attapulgit, einschließt.

7. Wabenstruktur gemäß irgendeinem der Ansprüche 1 bis 6, **dadurch gekennzeichnet, dass** die ein oder mehreren Wabeneinheiten weiterhin anorganische Fasern einschließen.

8. Wabenstruktur gemäß Anspruch 7, **dadurch gekennzeichnet, dass** die anorganischen Fasern mindestens eine, ausgewählt aus der Gruppe, bestehend aus Aluminiumoxid, Siliciumdioxid, Siliciumcarbid, Siliciumdioxid-Aluminiumoxid, Glas, Kaliumtitanat und Aluminiumborat sind.

9. Wabenstruktur gemäß irgendeinem der Ansprüche 1-8, **dadurch gekennzeichnet, dass** die Beschichtungsschicht mindestens eines aus anorganischen Partikeln, einem anorganischen Bindemittel und anorganischen Fasern einschließt.

10. Wabenstruktur gemäß Anspruch 9, **dadurch gekennzeichnet, dass** die in der Beschichtungsschicht beinhalteten anorganischen Partikel mindestens eines, ausgewählt aus der Gruppe bestehend aus Zeolith, Aluminiumoxid, Siliciumdioxid, Zirkoniumdioxid, Titandioxid, Ceroxid und Mullit, einschließt.

11. Wabenstruktur gemäß Anspruch 9 oder 10, **dadurch gekennzeichnet, dass** das in der Beschichtungsschicht beinhaltete anorganische Bindemittel mindestens eines aus der Gruppe bestehend aus Aluminiumoxidsol, Siliciumdioxidsol, Titandioxidsol, Wasserglas, Sepiolith und Attapulgit einschließt.

12. Wabenstruktur gemäß irgendeinem der Ansprüche 9 bis 11, **dadurch gekennzeichnet, dass** die in der Beschichtungsschicht beinhalteten anorganischen Fasern mindestens eine, ausgewählt aus der Gruppe bestehend aus Aluminiumoxid, Siliciumdioxid, Siliciumcarbid, Siliciumdioxid-Aluminiumoxid, Glas, Kaliumtitanat und Aluminiumborat, sind.

13. Wabenstruktur gemäß irgendeinem der Ansprüche 1 bis 12, **dadurch gekennzeichnet, dass** die mehreren Wabeneinheiten durch Einbringen einer Haftschicht verbunden sind.

**Revendications**

1. Structure en nid d'abeilles comportant une ou plusieurs unité(s) en nid d'abeilles à colonne et une couche de revêtement prévue sur une surface périphérique de la ou des plusieurs unité(s) en nid d'abeilles, la ou les plusieurs unité(s) en nid d'abeilles étant chacune obtenue en fabriquant un corps moulé de structure en nid d'abeilles par moulage par extrusion en utilisant une pâte de matière première comportant de la zéolite, des particules inorganiques et un liant inorganique, en séchant le corps moulé et ensuite en effectuant la cuisson du corps moulé à une température comprise entre 600 et 1200°C, l'unité en nid d'abeilles présentant une pluralité de cellules sous la forme de trous traversants séparés par une paroi cellulaire, les trous traversants s'étendant à partir d'une première face d'extrémité vers une deuxième face d'extrémité de l'unité en nid d'abeilles le long d'une direction longitudinale de celle-ci, **caractérisée en ce que**

$$0,75 \leq Kc/Kh \leq 1,25,$$

et

$$0,75 \leq Ec/Eh \leq 1,25$$

inclus,
où Kc et Ec représentent un coefficient de dilatation thermique et un module d'élasticité d'Young, respectivement, de la couche de revêtement dans une direction radiale de la structure en nid d'abeilles, et Kh et Eh représentent un coefficient de dilatation thermique et un module d'élasticité d'Young, respectivement, de l'unité en nid d'abeilles dans la direction radiale de la structure en nid d'abeilles, le coefficient de dilatation thermique est mesuré à 700°C.

2. Structure en nid d'abeilles tel que revendiquée dans la revendication 1, **caractérisée en ce que** la zéolite est l'une parmi la zéolite β, la zéolite Y, la ferriérite, la zéolite ZSM-5, la mordénite, la faujasite, la zéolite A, et la zéolite L.

3. Structure en nid d'abeilles tel que revendiquée dans la revendication 1 ou 2, **caractérisée en ce que** le rapport en poids de la silice sur l'alumine est compris entre 30 et 50 dans la zéolite.

4. Structure en nid d'abeilles tel que revendiquée dans l'une des revendications 1 à 3, **caractérisée en ce que** la zéolite subit un échange d'ions avec l'un des ions Fe, Cu, Ni, Co, Zn, Mn, Ti, Ag, et V.

5. Structure en nid d'abeilles tel que revendiquée dans l'une des revendications 1 à 4, **caractérisée en ce que** les particules inorganiques comportent des particules d'au moins un élément choisi dans le groupe constitué par l'alumine, la silice, la zircone, l'oxyde de titane, l'oxyde de cérium, et la mullite.

6. Structure en nid d'abeilles tel que revendiquée dans l'une des revendications 1 à 5, **caractérisée en ce que** le liant inorganique comporte au moins un élément choisi dans le groupe constitué par le sol d'alumine, le sol de silice, le sol d'oxyde de titane, le verre soluble, la sépiolite, et l'attapulgite.

7. Structure en nid d'abeilles tel que revendiquée dans l'une des revendications 1 à 6, **caractérisée en ce que** la ou les plusieurs unités en nid d'abeilles comporte/comportent en outre des fibres inorganiques.

8. Structure en nid d'abeilles tel que revendiquée dans la revendication 7, **caractérisée en ce que** les fibres inorganiques sont au moins un élément choisi dans le groupe constitué par l'alumine, la silice, le carbure de silicium, la silice-alumine, le verre, le titanate de potassium, et le borate d'aluminium.

9. Structure en nid d'abeilles tel que revendiquée dans l'une des revendications 1 à 8, **caractérisée en ce que** la couche de revêtement comporte au moins un élément parmi des particules inorganiques, un liant inorganique, et des fibres inorganiques.

10. Structure en nid d'abeilles tel que revendiquée dans la revendication 9, **caractérisée en ce que** les particules inorganiques incluses dans la couche de revêtement comportent au moins un élément choisi dans le groupe constitué par la zéolite, l'alumine, la silice, la zircone, l'oxyde de titane, l'oxyde de cérium, et la mullite.

11. Structure en nid d'abeilles tel que revendiquée dans la revendication 9 ou 10, **caractérisée en ce que** le liant inorganique inclus dans la couche de revêtement comporte au moins un élément choisi dans le groupe constitué par le sol d'alumine, le sol de silice, le sol d'oxyde de titane, le verre soluble, la sépiolite et l'attapulgite .

12. Structure en nid d'abeilles tel que revendiquée dans l'une des revendications 9 à 11, **caractérisée en ce que** les fibres inorganiques incluses dans la couche de revêtement sont au moins un élément choisi dans le groupe constitué par l'alumine, la silice, le carbure de silicium, la silice-alumine, le verre, le titanate de potassium et le borate d'aluminium.

13. Structure en nid d'abeilles tel que revendiquée dans l'une des revendications 1 à 12, **caractérisée en ce que** les plusieurs unités en nid d'abeilles sont assemblées par interposition d'une couche adhésive.

# FIG.1

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005063653 A
- WO 2003067042 A
- EP 1479882 A1